(19) Europäisches Patentamt
European Patent Office
Office européen des brevets

(11) **EP 4 236 151 A1**

(12) **EUROPEAN PATENT APPLICATION**
published in accordance with Art. 153(4) EPC

(43) Date of publication:
**30.08.2023 Bulletin 2023/35**

(21) Application number: **21881831.8**

(22) Date of filing: **26.09.2021**

(51) International Patent Classification (IPC):
**H04L 5/00** (2006.01)    **H04B 7/06** (2006.01)

(52) Cooperative Patent Classification (CPC):
**H04B 7/06; H04L 5/00**

(86) International application number:
**PCT/CN2021/120780**

(87) International publication number:
**WO 2022/083412 (28.04.2022 Gazette 2022/17)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **23.10.2020 CN 202011147246**

(71) Applicant: **Datang Mobile Communications
Equipment Co., Ltd.
Beijing 100085 (CN)**

(72) Inventors:
• **LIU, Zhengxuan
Beijing 100085 (CN)**
• **GAO, Qiubin
Beijing 100085 (CN)**

(74) Representative: **Cabinet Nony
11 rue Saint-Georges
75009 Paris (FR)**

(54) **CSI-RS ENHANCED TRANSMISSION METHOD AND APPARATUS**

(57) Disclosed in the present disclosure are a CSI-RS enhanced transmission method and apparatus to solve the problem that some beams cannot be sent. The method comprises: a network side determining a number K of CSI-RS resources configured for a terminal side, wherein the k-th CSI-RS resource includes Pk CSI-RS antenna ports; and then sending beamformed CSI-RS to the terminal side by using P different beams through P CSI-RS antenna ports respectively, wherein (I), and P is the number of beams to be sent. In this way, the network side reasonably configures, on the basis of the number of beams to be sent, the CSI-RS resources and the number of CSI-RS antenna ports included in each CSI-RS resource, and then sends the beamformed CSI-RS to the terminal side by using one beam on each CSI-RS antenna port; and thus, the P beams can all be transmitted to the terminal side in time through the P CSI-RS antenna ports.

The network side determines K CSI-RS resources configured for the terminal side, where, K≥1, K is an integer, the $k^{th}$ CSI-RS resource includes $P_k$ CSI-RS antenna ports, and k ∈ [1, K] — 100

The network side sends beamformed CSI-RS to the terminal side by using P different beams on P CSI-RS antenna ports respectively, where, $P = \sum_{k=1}^{K} P_k$, and P is the number of beams to be sent — 110

FIG. 1

EP 4 236 151 A1

## Description

## Cross Reference to Related Applications

The present application claims priority to Chinese Patent Application No. 202011147246.3, filed to the China National Intellectual Property Administration on October 23, 2020 and entitled "CSI-RS ENHANCED TRANSMISSION METHOD AND APPARATUS", the entire contents of which are incorporated herein by reference.

## Field

The disclosure relates to the field of communication technology, in particular to a CSI-RS enhanced transmission method and apparatus.

## Background

In a 5th generation (5G) new radio (NR) system, a channel state information-reference signal (CSI-RS) is a very important reference signal.

In the related art, before user equipment (UE) receives downlink data sent by a network side, the network side needs to send a beamformed CSI-RS to the UE by using different beams on CSI-RS antenna ports respectively, then, the UE selects beams meeting its use requirements based on the received CSI-RS and notifies the network side of beam indication information and beam combination coefficients, and the network side obtains a downlink precoder based on the beam indication information and the beam combination coefficients, so as to send the downlink data to the UE based on the downlink precoder.

For example, based on a cascade feedback solution, the downlink precoder used by the network side may be represented by the following formula:

$$W = W1W2$$

where, W1 represents the beam indication information fed back to the network side by the UE, and W2 represents the beam combination coefficients fed back to the network side by the UE.

It assumes that W1 indicates two beams selected by the UE, which are respectively a beam B1 and a beam B2, and it assumes that W2 indicates that a beam combination coefficient of the beam B1 is a and a beam combination coefficient of the beam B2 is b.

Then, the downlink precoder obtained by the network side is W=a*B1+b*B2, so that the network side sends the downlink data to the UE based on the downlink precoder W=a*B 1+b*B2.

It can be seen that the network side sends the beamformed CSI-RS by using different beams reasonably on the CSI-RS antenna ports respectively, so that it may be ensured that the UE can accurately receive the downlink data sent by the network side in time.

Based on a Rel-15/16 port of the NR system, the network side only uses one beam to perform beamforming on the CSI-RS and then send the CSI-RS at each CSI-RS antenna port.

One beam is a two-dimension beam containing a vertical direction and a horizontal direction, and each two-dimension beam corresponds to one piece of space angle information in channel information.

Based on a Rel-17 port of the NR system, channel information is formed by combining information of a plurality of transmission paths, information of one transmission path contains space angle information and delay information, one transmission path is associated with one beam, that is, one beam also corresponds to an angle and a delay, where the angle information may be represented by using a spatial domain basis vector, and the delay information may be represented by using a frequency domain basis vector.

Due to the complexity of a UE environment, a signal from the network may be sent to the UE through more transmission paths. When the beamformed CSI-RS is sent by using the beams based on the CSI-RS antenna ports, if each transmission path is indicated by one beam, more CSI-RS antenna ports need to be used for transmitting more beams.

However, in practical application, the total number of the CSI-RS antenna ports in the NR system is limited, if the technical solution that one CSI-RS antenna port can only send one beam in the related art is still adopted, some beamformed CSI-RS cannot be sent in time, and therefore timely and accurate transmission of the downlink data is affected.

It can be seen that a novel technical solution needs to be designed to overcome the above defects.

## Summary

The disclosure provides a CSI-RS enhanced transmission method and apparatus for solving the problem that not all beamformed CSI-RS can be sent in time.

The specific technical solution provided by embodiments of the disclosure is as follows.

In a first aspect, a channel state information-reference signal (CSI-RS) enhanced transmission method includes:

determining K CSI-RS resources configured for a terminal side, where, $K \geq 1$, K is an integer, a $k^{th}$ CSI-RS resource comprises $P_k$ CSI-RS antenna ports, and kE [1, K]; and
sending a beamformed CSI-RS to the terminal side by using P different beams on P CSI-RS antenna ports respectively, where, $P = \sum_{k=1}^{K} P_k$, and P is a quantity of beams to be sent.

Optionally, before sending the beamformed CSI-RS to the terminal side by using the P different beams on the P CSI-RS antenna ports respectively, the method further includes:

determining indexes of the P CSI-RS antenna ports as follows:

> ordering identities (IDs) of the K CSI-RS resources from small to large;
> configuring a quantity of CSI-RS antenna ports in each of the K CSI-RS resources respectively based on the quantity of the beams to be sent, where, the $k^{th}$ CSI-RS resource is configured to comprise $P_k$ CSI-RS antenna ports, $k \in$ [1, K], $P = \sum_{k=1}^{K} P_k$, and P is the quantity of the beams to be sent; and
> setting indexes of the CSI-RS antenna ports in each of the K CSI-RS resources respectively, based on the IDs of the K CSI-RS resources and the quantity of the CSI-RS antenna ports in each of the K CSI-RS resources.

Optionally, before determining the K CSI-RS resources configured for the terminal side, the method further includes:

> configuring the K CSI-RS resources on a same orthogonal frequency division multiplexing (OFDM) symbol; or
> configuring the K CSI-RS resources on different OFDM symbols.

Optionally, before sending the beamformed CSI-RS to the terminal side by using the P different beams on the P CSI-RS antenna ports respectively, the method further includes:

> estimating uplink channel information based on an uplink pilot signal; and
> determining P beams used for sending the CSI-RS to the terminal side according to the uplink channel information;
> where any one of the P beams is associated with any one or combination of the following information:
> a spatial domain basis vector representing angle information, or a frequency domain basis vector representing delay information.

Optionally, sending the beamformed CSI-RS to the terminal side by using the P different beams through the P CSI-RS antenna ports respectively includes: executing the following operation respectively for the P CSI-RS antenna ports:

> determining an $i^{th}$ CSI-RS antenna port, wherein, i $\in$ [n, n+P-1], and n is an initial value of an index of the CSI-RS antenna port; and

sending an $i^{th}$ beam corresponding to the $i^{th}$ antenna port to the terminal side on the $i^{th}$ antenna port, after performing beamforming on the CSI-RS using the $i^{th}$ beam.

Optionally, after sending the beamformed CSI-RS to the terminal side by using the P different beams through the P CSI-RS antenna ports respectively, the method further includes:

determining a downlink precoder for sending downlink data to the terminal side based on feedback information from the terminal side, wherein the feedback information comprises any one or combination of following:

> port indication information of one or L data transmission layers selected by the terminal side, where, L> 1, and L is an integer;
> port combination coefficients of the one or L data transmission layers obtained by the terminal side through calculation based on the received beamformed CSI-RS; or
> nonzero coefficient indication information of the one or L data transmission layers selected by the terminal side.

In a second aspect, a method for sending feedback information includes:

> receiving CSI-RS sent by a network side by using the method described in any of the first aspect above; and
> sending feedback information to the network side.

Optionally, sending the feedback information to the network side includes:

> selecting Q CSI-RS antenna ports from P CSI-RS antenna ports;
> performing quantization processing on port combination coefficients of one or L data transmission layers corresponding to the Q CSI-RS antenna ports; and
> sending the quantized port combination coefficients to the network side, where, L>1, and L is an integer.

Optionally, sending the feedback information to the network side includes:

sending port indication information of one or L data transmission layers corresponding to the CSI-RS antenna ports in a first polarization direction to the network side, where, L>1, and L is an integer.

Optionally, the method further includes:

> sending the port indication information of the one or L data transmission layers using a bitmap, or, sending the port indication information of the one or L data transmission layers using a combinatorial number, where, L>1, and L is an integer;

and

sending nonzero coefficient indication information of the one or L data transmission layers using a bitmap, or, sending the nonzero coefficient indication information of the one or L data transmission layers using a combinatorial number.

In a third aspect, a network device includes a memory, configured to store executable instructions; and a processor, configured to read and execute the executable instructions stored in the memory so as to execute the following process:

determining K CSI-RS resources configured for a terminal side, where, $K \geq 1$, K is an integer, a $k^{th}$ CSI-RS resource comprises $P_k$ CSI-RS antenna ports, and $kE [1, K]$; and
sending a beamformed CSI-RS to the terminal side by using P different beams on P CSI-RS antenna ports respectively, wherein, $P = \sum_{k=1}^{K} P_k$ , and P is a quantity of beams to be sent.

Optionally, before sending the beamformed CSI-RS to the terminal side by using the P different beams on the P CSI-RS antenna ports respectively, the processor is further configured to determine indexes of the P CSI-RS antenna ports as follows:

ordering identities of the K CSI-RS resources from small to large;
configuring a quantity of CSI-RS antenna ports in each of the K CSI-RS resources respectively based on the quantity of the beams to be sent, where, the $k^{th}$ CSI-RS resource is configured to comprise $P_k$ CSI-RS antenna ports, $kE [1, K]$, $P = \sum_{k=1}^{K} P_k$ , and P is the quantity of the beams to be sent; and
setting indexes of the CSI-RS antenna ports in each of the K CSI-RS resources respectively, based on the IDs of the K CSI-RS resources and the quantity of the CSI-RS antenna ports in each of the K CSI-RS resources.

Optionally, before determining the K CSI-RS resources configured for the terminal side, the processor is further configured to perform:

configuring the K CSI-RS resources on the same orthogonal frequency division multiplexing (OFDM) symbol; or
configuring the K CSI-RS resources on different OFDM symbols.

Optionally, before sending the beamformed CSI-RS to the terminal side by using the P different beams on the P CSI-RS antenna ports respectively, the processor is further configured to perform:

estimating uplink channel information based on an uplink pilot signal; and
determining P beams used for sending the CSI-RS to the terminal side according to the uplink channel information;
where any one of the P beams is associated with any one or combination of the following information: a spatial domain basis vector representing angle information, or a frequency domain basis vector representing delay information.

Optionally, after sending the beamformed CSI-RS to the terminal side by using the P different beams through the P CSI-RS antenna ports respectively, the processor is configured to perform the following operation respectively for the P CSI-RS antenna ports:

determining an $i^{th}$ CSI-RS antenna port, wherein, $i E [n, n+P-1]$, and n is an initial value of an index of the CSI-RS antenna port; and
sending an $i^{th}$ beam corresponding to the $i^{th}$ antenna port to the terminal side on the $i^{th}$ antenna port, after performing beamforming on the CSI-RS using the $i^{th}$ beam.

Optionally, after sending the beamformed CSI-RS to the terminal side by using the P different beams on the P CSI-RS antenna ports respectively, the processor is further configured to perform:
determining a downlink precoder for sending downlink data to the terminal side based on feedback information from the terminal side, where the feedback information comprises any one or combination of following:

port indication information of one or L data transmission layers selected by the terminal side, where, $L > 1$, and L is an integer;
port combination coefficients of the one or L data transmission layers obtained by the terminal side through calculation based on the received beamformed CSI-RS; or
nonzero coefficient indication information of the one or L data transmission layers selected by the terminal side.

In a fourth aspect, a computer terminal includes a memory, configured to store executable instructions; and a processor, configured to read and execute the executable instructions stored in the memory so as to execute the following process:
receiving a CSI-RS sent by a network side by using the method described in any of the first aspect above, and sending feedback information to the network side.
Optionally, when sending the feedback information to the network side, the processor is configured to perform:

selecting Q CSI-RS antenna ports from P CSI-RS antenna ports; and

performing quantization processing on port combination coefficients of one or L data transmission layers corresponding to the Q CSI-RS antenna ports, and sending the quantized port combination coefficients to the network side, where, L>1, and L is an integer.

Optionally, when sending the feedback information to the network side, the processor is configured to perform:

sending port indication information of one or L data transmission layers corresponding to the CSI-RS antenna ports in a first polarization direction to the network side, where, L>1, and L is an integer.

Optionally, the processor is further configured to perform:

sending the port indication information of the one or L data transmission layers using a bitmap, or, sending the port indication information of the one or L data transmission layers using a combinatorial number, where, L>1, and L is an integer; and sending nonzero coefficient indication information of the one or L data transmission layers using a bitmap, or, sending the nonzero coefficient indication information of the one or L data transmission layers using a combinatorial number.

In a fifth aspect, a CSI-RS enhanced transmission apparatus, includes:

a determining unit, used for determining K CSI-RS resources configured for a terminal side, where, K ≥ 1, K is an integer, a $k^{th}$ CSI-RS resource includes $P_k$ CSI-RS antenna ports, and kE [1, K]; and a sending unit, used for sending a beamformed CSI-RS to the terminal side by using P different beams on P CSI-RS antenna ports respectively, where,

$$P = \sum_{k=1}^{K} P_k$$, and P is the number of beams to be sent.

In a sixth aspect, an apparatus for sending feedback information, includes:

a feedback unit, used for receiving CSI-RS sent by a network side by adopting the method described in any of the first aspect above and sending feedback information to the network side.

In a seventh aspect, a computer readable storage medium is provided, and instructions in the computer readable storage medium, when executed by a processor, enable the processor to execute the method described in any of the first aspect above.

In an eighth aspect, a computer readable storage medium is provided, and instructions in the computer readable storage medium, when executed by a processor, enable the processor to execute the method described in any of the second aspect above.

In the embodiments of the disclosure, the network side determines the K CSI-RS resources configured for the terminal side, where the $k^{th}$ CSI-RS resource includes the $P_k$ CSI-RS antenna ports; then the beamformed CSI-RS is sent to the terminal side by using the P different beams on the P CSI-RS antenna ports respectively, where, $P = \sum_{k=1}^{K} P_k$, and P is the number of the beams to be sent. In this way, the network side may reasonably configure, based on the number of the beams to be sent, the CSI-RS resources and the number of the CSI-RS antenna ports included in the CSI-RS resources in advance, and on each CSI-RS antenna port, the beamformed CSI-RS is sent to the terminal side by using one beam, so that all beams to be sent of the CSI-RS can be sent to the CSI-RS antenna ports in time, and the situation that some beamformed CSI-RS cannot be sent in time due to the limitation of the total number of CSI-RS antenna ports in the NR system is effectively avoided.

## Brief Description of the Drawings

FIG. 1 is a schematic flow chart of a network side performing CSI-RS enhanced transmission according to an embodiment of the disclosure.
FIG. 2 is a schematic flow chart of a terminal side assisting in CSI-RS enhanced transmission according to an embodiment of the disclosure.
FIG. 3 is a schematic diagram of a CSI-RS resource pattern configured by a network side in a first application scenario according to an embodiment of the disclosure.
FIG. 4 is a schematic diagram of a bitmap for indicating port indication information in a first application scenario according to an embodiment of the disclosure.
FIG. 5 is a schematic diagram of a CSI-RS resource pattern configured by a network side in a second application scenario according to an embodiment of the disclosure.
FIG. 6 is a schematic diagram of a bitmap for indicating port indication information in a second application scenario according to an embodiment of the disclosure.
FIG. 7 is a schematic structural architecture diagram of a network device according to an embodiment of the disclosure.
FIG. 8 is a schematic logical architecture diagram of a network device according to an embodiment of the disclosure.
FIG. 9 is a schematic structural architecture diagram of a computer terminal according to an embodiment of the disclosure.

FIG. 10 is a schematic logical architecture diagram of a computer terminal according to an embodiment of the disclosure.

**Detailed Description**

In order to solve the problem that not all beamformed CSI-RS can be sent in time, in embodiments of the disclosure, a network side may reasonably configure the number of CSI-RS resources based on the number of beams to be sent, and reasonably configure the number of CSI-RS antenna ports included in the respective CSI-RS resources, so as to enable all the beams to be sent in time while the beamformed CSI-RS is sent on each CSI-RS antenna port.

The preferred embodiments of the disclosure will be described in detail below with reference to accompanying drawings.

In embodiments of the disclosure, a network side may configure K CSI-RS resources for a terminal side based on the number of beams to be sent, the K CSI-RS resources include a plurality of CSI-RS antenna ports, where, $K \geq 1$, K is an integer, a $k^{th}$ CSI-RS resource includes $P_k$ CSI-RS antenna ports, and $k \in [1, K]$.

During specific implementation, the network side configures the K CSI-RS resources for the terminal side based on P different beams to be sent, the K CSI-RS resources include a plurality of CSI-RS antenna ports, where, $K \geq 1$, K is an integer, the $k^{th}$ CSI-RS resource includes $P_k$ CSI-RS antenna ports, $P = \sum_{k=1}^{K} P_k$, and P is the number of beams to be sent.

For example, the network side configures, for each CSI-RS resource, the corresponding number of CSI-RS antenna ports, specifically as follows:

for a first CSI-RS resource, two CSI-RS antenna ports are configured and $P_1 = 2$;

for a second CSI-RS resource, one CSI-RS antenna port is configured and $P_2 = 1$;

for the $k^{th}$ CSI-RS resource, six CSI-RS antenna ports are configured, $P_k = 6$, and $k \in [1, K]$;

for the $K^{th}$ CSI-RS resource, four CSI-RS antenna ports are configured, and $P_K = 4$.

Here, k represents an index of the CSI-RS resources, and may represent any one of the CSI-RS resources.

Optionally, the network side configures the above K CSI-RS resources on the same orthogonal frequency division multiplexing (OFDM) symbols, or configures the K CSI-RS resources on different OFDM symbols.

In another aspect, in the process of configuring the K CSI-RS resources for the terminal side by the network side, optionally, IDs of the K CSI-RS resources need to be ordered from small to large, then, the network side sets indexes of the CSI-RS antenna ports included in the K CSI-RS resources respectively based on the IDs of the K CSI-RS resources and the number of CSI-RS antenna ports included in each of the K CSI-RS resources.

During specific implementation, the network side configures the IDs of the K CSI-RS resources for the terminal side, the numbers of the CSI-RS antenna ports corresponding to the K CSI-RS resources respectively are $P_1, P_2, ..., P_k, ...,$ and $P_K$ respectively, and then the network side sets the indexes of the CSI-RS antenna ports to be: n, n+1, ..., $n+P_1-1$, $n+P_1$, ..., $n+P_1+P_2-1$, ..., and n+P-1 respectively. The indexes of the CSI-RS antenna ports of the first CSI-RS resource are n, n+1, ..., $n+P_1-1$, the indexes of the CSI-RS antenna ports of the second CSI-RS resource are $n+P_1$, ..., $n+P_1+P_2-1$, and so on, which is not repeated.

The network side sets the indexes of the CSI-RS antenna ports included in the K CSI-RS resources respectively based on the order from small to large of the IDs of the K CSI-RS resources, and the obtained indexes of the CSI-RS antenna ports are also ordered from small to large.

For example, the CSI-RS resource containing four ports is taken as an example.

It assumes that the first CSI-RS resource contains four CSI-RS antenna ports, and it assumes that an initial value of the index of the CSI-RS antenna ports is 3000.

The network side orders the IDs of the K CSI-RS resources from small to large, and then sets the indexes of the CSI-RS antenna ports included in the first CSI-RS resource to be 3000, 3001, 3002 and 3003 respectively based on the ID of the first CSI-RS resource and the number of the CSI-RS antenna ports included in the first CSI-RS resource, namely, $P_1 = 4$.

Setting the indexes of all the CSI-RS antenna ports according to the above method allows the network side to accurately obtain the CSI-RS antenna ports selected by the terminal side based on port indication information fed back and selected by the terminal side, so as to avoid different recognition of the network side and the terminal side for the port indication information of the CSI-RS antenna ports, thereby avoiding errors when the network uses the CSI-RS antenna ports and port combination coefficients selected by the terminal side.

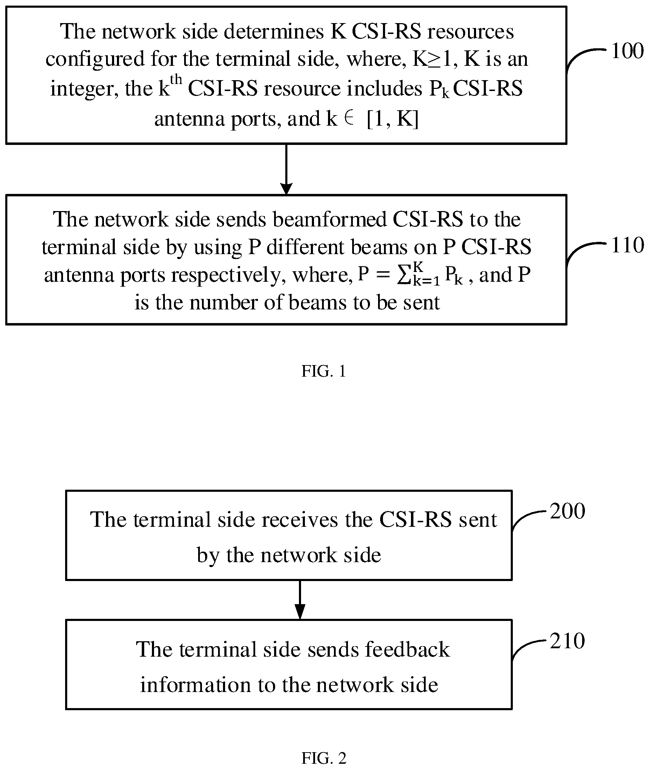

Based on the above resource allocation, in embodiments of the disclosure, referring to FIG. 1, the specific flow for the network side performing CSI-RS enhanced transmission is as follows.

Step 100: the network side determines K CSI-RS resources configured for the terminal side, where, $K \geq 1$, K is an integer, the $k^{th}$ CSI-RS resource includes $P_k$

CSI-RS antenna ports, and k∈ [1, K].

The specific configuration mode of the network side for configuring the CSI-RS resources for the terminal side has been introduced in the above-mentioned content, which is not repeated here.

Step 110: the network side sends beamformed CSI-RS to the terminal side by using P different beams on P CSI-RS antenna ports respectively, where,

$$P = \sum_{k=1}^{K} P_k$$, and P is the number of beams to be sent.

Optionally, before step 110, the network side may determine, by estimation, uplink channel information based on an uplink pilot signal (such as SRS or DMRS), then determine P beams used for sending CSI-RS to the terminal side according to the uplink channel information. Here, any one of the P beams is associated with any one or combination of the following information: a spatial domain basis vector representing angle information, and a frequency domain basis vector representing delay information.

Specifically, when the step 110 is performed, the network side performs the following operation for all the CSI-RS antenna ports.

Taking the i$^{th}$ CSI-RS antenna port as an example, the network side specifically executes the following operation for the i$^{th}$ CSI-RS antenna port: on the i$^{th}$ CSI-RS antenna port, sending an i$^{th}$ beam to the terminal side after performing beamforming on the CSI-RS using the i$^{th}$ beam, i ∈ [n, n+P-1], where, n is an initial value of an index value of the CSI-RS antenna port.

Based on the above method, the network side may configure corresponding CSI-RS resources for the terminal side in advance based on the number of the beams to be sent, then send the beamformed CSI-RS to the terminal side respectively using a corresponding beam on a respective one of CSI-RS antenna ports included in the CSI-RS resources. In this way, all beams to be sent of the CSI-RS may be sent on the CSI-RS antenna ports in time, so that the situation that the total number of beams required to be used is larger than the total number of the CSI-RS antenna ports configured for the terminal side is avoided, and the situation that some beamformed CSI-RS cannot be sent in time is avoided.

Further, based on the above embodiment, after step 110, the network side may determine a downlink precoder used for sending downlink data to the terminal side based on feedback information from the terminal side, where the feedback information includes any one or combination of the followings 1-3.

1. Port indication information of one or L data transmission layers selected by the terminal side, where, L> 1, and L is an integer.

Optionally, the feedback information from the terminal side received by the network side may be port indication information of one data transmission layer selected by the terminal side, or may be port indication information of L data transmission layers selected by the terminal side, where, L>1, L is an integer. The port indication information of the respective data transmission layers may be the same or different.

Specifically, since the network side sends the beamformed CSI-RS to the terminal side respectively using one corresponding beam on each CSI-RS antenna port configured in advance, the port indication information of one or L data transmission layers fed back and selected by the terminal side corresponds to beam indication information of one or L data transmission layers selected by the terminal side, so the network side may obtain the beam indication information of one or L data transmission layers based on the feedback information sent by the terminal side.

2. Port combination coefficients of the one or L data transmission layers obtained by the terminal side through calculation based on the received beamformed CSI-RS.

Specifically, since the network side sends the beamformed CSI-RS to the terminal side receptively using one corresponding beam on each CSI-RS antenna port configured in advance, the port combination coefficients of one or L data transmission layers obtained by the terminal side through calculation based on the received beamformed CSI-RS corresponds to beam combination coefficients of one or L data transmission layers, and thus, the network side may obtain the beam combination coefficients of one or L data transmission layers based on the feedback information sent by the terminal side.

3. Nonzero coefficient indication information of the one or L data transmission layers selected by the terminal side.

During specific implementation, in some scenarios, the terminal does not report all port combination coefficients, but only reports nonzero port combination coefficients. Accordingly, in order to enable the network side to clearly learn which port combination coefficients are reported by the terminal side, the terminal side further needs to feed back nonzero coefficient indication information to the network side.

Optionally, the network side may obtain all port combination coefficients of one or L data transmission layers based on the nonzero port combination coefficients reported by the terminal side and the nonzero coefficient indication information of the one or L data transmission layers selected by the terminal side, and accordingly, the network side may also obtain the beam combination coefficients of one or L data transmission layers.

Therefore, the network side may obtain a downlink precoder of downlink data from the network side to the terminal side based on the beam combination coefficients of one or L data transmission layers and the corresponding beam indication information.

Referring to FIG. 2, in embodiments of the disclosure, the specific flow of the terminal side assisting in CSI-RS enhanced transmission based on receiving the beamformed CSI-RS sent by the network side is as follows.

Step 200: the terminal side receives the CSI-RS sent by the network side.

Step 210: the terminal side sends feedback information to the network side.

Specifically, the feedback information sent to the network side by the terminal side at least includes any one or combination of the following 1)- 3).

1) port indication information of one or L data transmission layers selected by the terminal side, where, L>1, and L is an integer.

Specifically, the terminal side sends port indication information of one or L data transmission layers corresponding to each CSI-RS antenna port in a first polarization direction to the network side, where, L>1, and L is an integer.

Optionally, if the port indication information of one or L data transmission layers selected by the terminal side is the same port indication information, the terminal side only feeds back port indication information of one data transmission layer; otherwise, if the port indication information of one or L data transmission layers selected by the terminal side is different, the terminal side needs to respectively feed back port indication information of all the data transmission layers selected by the terminal side.

2) Port combination coefficients of the one or L data transmission layers obtained by the terminal side through calculation based on the received beamformed CSI-RS.

During specific implementation, the terminal side selects Q CSI-RS antenna ports from P CSI-RS antenna ports based on the received beamformed CSI-RS sent by the network side; and the port combination coefficients of one or L data transmission layers corresponding to the Q CSI-RS antenna ports are quantized, and the quantized port combination coefficients are sent to the network side.

3) Nonzero coefficient indication information of the one or L data transmission layers selected by the terminal side.

During specific implementation, the terminal side may find out nonzero port combination coefficients from the selected port combination coefficients of one or L data transmission layers, and then feed back the nonzero port combination coefficients to the network side. In order to enable the network side to clearly learn which port combination coefficients are reported by the terminal side, the terminal side will feed back the selected nonzero coefficient indication information of the one or L data transmission layers to the network side.

Optionally, in the process of sending the feedback information to the network side, the terminal side may send the port indication information of the one or L data transmission layers by using a bitmap. Or, the terminal side may send the port indication information of the one or L data transmission layers by using a combinatorial number. Here, L> 1, and L is an integer.

Optionally, in the process of sending the feedback information to the network side, the terminal side may send the nonzero coefficient indication information of the one or L data transmission layers by adopting the bitmap mode; or, the terminal side may send the nonzero coefficient indication information of the one or L data transmission layers by using a combinatorial number. Here, L>1, and L is an integer.

It assumes that the terminal side selects Q CSI-RS antenna ports from P CSI-RS antenna ports, the corresponding combinatorial number may be represented by using the following formula: $\left\lceil \log_2 C_Q^P \right\rceil$.

Here, $C_b^a$ represents combination operation, which determines the number of all possibilities for grouping b items from the total a items.

The above embodiments are further explained in detail below through specific application scenarios.

Application scenario 1

It assumes that the network side configures a CSI-RS resource (marked as CSI-RS 0) including 32 CSI-RS antenna ports and a CSI-RS resource (marked as CSI-RS 1) including 16 CSI-RS antenna ports respectively for the terminal side, and an initial value of indexes of the CSI-RS antenna ports is 0.

Then, it assumes that the total number of the CSI-RS antenna ports used by the network side for sending beams is P=32+16=48, and the indexes of 48 CSI-RS antenna ports are sequentially denoted as: 0, 1, ..., and 47.

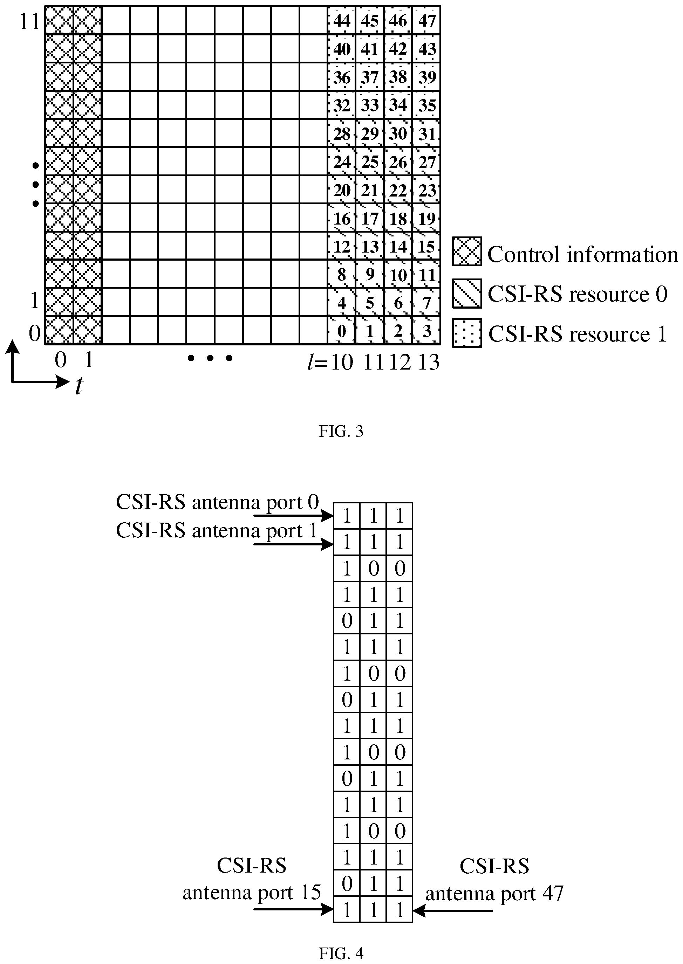

It assumes that the network side configures the CSI-RS 0 and the CSI-RS 1 on the same OFDM symbols, for example, referring to FIG. 3, the network side configures the CSI-RS 0 for the terminal side according to a CSI-RS antenna port pattern of the CSI-RS 0, and then configures the CSI-RS 1 for the terminal side according to a CSI-RS antenna port pattern of the CSI-RS 1, and as shown in FIG. 3, the network side configures the CSI-RS 0 and the CSI-RS 1 on four OFDM symbols in a resource block (RB).

The indexes for the CSI-RS antenna ports included in the CSI-RS 0 and the CSI-RS 1 configured by the network side are as follows.

The indexes of 32 CSI-RS antenna ports included in the CSI-RS 0 configured by the network side are sequentially denoted as: 0, 1, ..., and 31; and the indexes of 16 CSI-RS antenna ports included in the CSI-RS 1 configured by the network side are sequentially denoted as: 32, 33, ..., and 47.

Then, the network side estimates uplink channel information based on an uplink pilot signal (such as SRS or DMRS), and determines P=48 beams used for sending the CSI-RS to the terminal side according to the uplink channel information. Here, any one of the above 48 beams may be represented as f⊗s, f is a frequency domain basis vector representing delay information, and s is a spatial domain basis vector representing angle information.

First, the network side sends the beamformed CSI-RS to the terminal side respectively using 32 beams on the 32 CSI-RS antenna ports (that is, the CSI-RS antenna ports with indexes 0, 1, ..., and 31 ) configured in advance in the CSI-RS 0; and then, the network side sends the beamformed CSI-RS to the terminal side respectively using the residual 16 beams on the residual 16 CSI-RS antenna ports (that is, the CSI-RS antenna ports with indexes 32, 33, ..., and 47 ) configured in advance in the CSI-RS 1.

After receiving the beamformed CSI-RS sent by the network side on the CSI-RS antenna ports, the terminal side selects 36 CSI-RS antenna ports from the above 48 CSI-RS antenna ports based on the received CSI-RS, and then sends port indication information of the selected 36 CSI-RS antenna ports to the network side.

Optionally, the terminal side may use a 48-bit bitmap to represent the port indication information.

For example, referring to FIG. 4, in the 48-bit bitmap, the CSI-RS antenna port selected by the terminal side is represented as 1, and the CSI-RS antenna port not selected by the terminal side is represented as 0.

For another example, the terminal side may send the above port indication information to the network side by using a combinatorial number (

$$\lceil \log_2 C_X^P \rceil = \lceil \log_2 C_{36}^{48} \rceil = 37 \text{ bits}$$

).

It assumes that the terminal side selects all the CSI-RS antenna ports, and the terminal side does not need to feed back the port indication information of the CSI-RS antenna ports selected by the terminal side to the network side.

In another aspect, after receiving the beamformed CSI-RS sent by the network side on the CSI-RS antenna ports, the terminal side may further estimate downlink equivalent channel information based on the received CSI-RS, and obtains port combination coefficients corresponding to the CSI-RS antenna ports through calculation and then feeds back the same to the network side.

It assumes that the terminal side selects 36 CSI-RS antenna ports from the above 48 CSI-RS antenna ports, the terminal side will perform quantization processing on the port combination coefficients corresponding to the above 36 CSI-RS antenna ports, and sends the quantized port combination coefficients to the network side.

Application scenario 2

It assumes that the network side configures a CSI-RS resource (marked as CSI-RS 0) including 32 CSI-RS antenna ports and a CSI-RS resource (marked as CSI-RS 1) including 16 CSI-RS antenna ports respectively for the terminal side, and an initial value of indexes of the CSI-RS antenna ports is 0.

It assumes that the total number of CSI-RS antenna ports used by the network side for sending beams is P=32+16=48, and indexes of the CSI-RS antenna ports are sequentially denoted as 0, 1, ..., and 47.

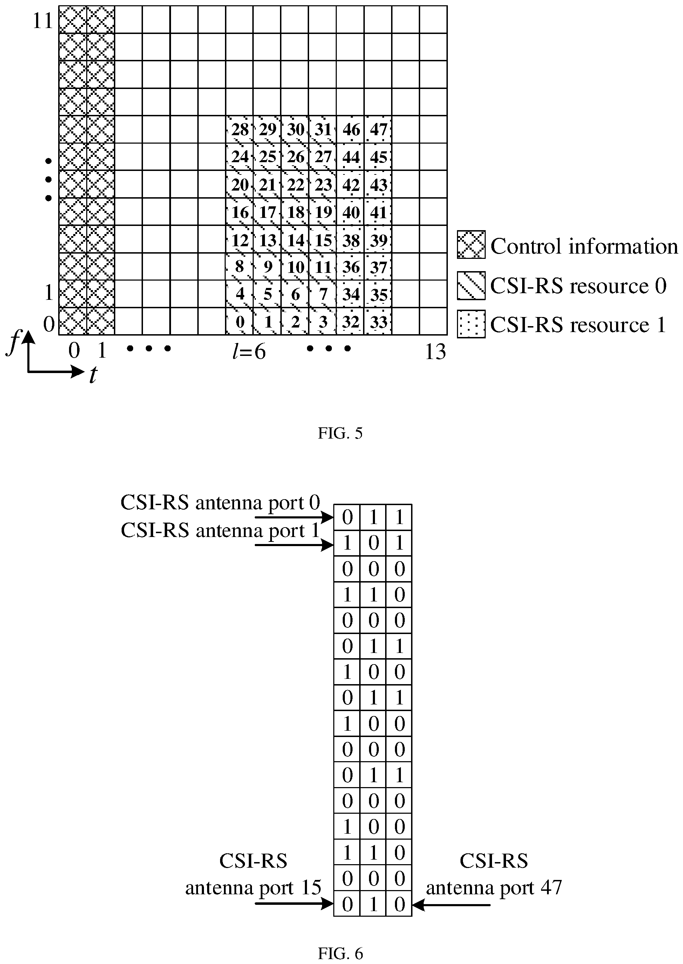

It assumes that the network side configures the CSI-RS 0 and the CSI-RS 1 on different OFDM symbols, for example, referring to FIG. 5, the network side configures the CSI-RS 0 for the terminal side according to a CSI-RS antenna port pattern of the CSI-RS 0, and then configures the CSI-RS 1 for the terminal side according to a CSI-RS antenna port pattern of the CSI-RS 1. As shown in FIG. 5, the network side configures the CSI-RS 0 and the CSI-RS 1 on 6 OFDM symbols in an RB, where the network side configures the CSI-RS 0 on the first 4 OFDM symbols in the RB, and configures the CSI-RS 1 on the next 2 OFDM symbols in the RB. Indexes configured for the CSI-RS antenna ports included in the CSI-RS 0 and the CSI-RS 1 by the network side are as follows.

The indexes of the 32 CSI-RS antenna ports included in the CSI-RS 0 configured by the network side are sequentially: 0, 1, ..., and 31; and the indexes of the 16 CSI-RS antenna ports included in the CSI-RS 1 configured by the network side are sequentially: 32, 33, ..., and 47.

Then, the network side estimates uplink channel information based on an uplink pilot signal (such as SRS or DMRS), and determines the P=48 beams used for sending the CSI-RS to the terminal side according to the uplink channel information. Here, any one of the above 48 beams may be represented as f⊗s, f is a frequency domain basis vector representing delay information, and s is a spatial domain basis vector representing angle information.

First, the network side sends the beamformed CSI-RS to the terminal side respectively using 32 beams on the 32 CSI-RS antenna ports (that is, the CSI-RS antenna ports with indexes sequentially 0, 1, ..., and 31 ) configured in advance in the CSI-RS 0; and then, the network side sends the beamformed CSI-RS to the terminal side respectively using the 16 beams on the residual 16 CSI-RS antenna ports (that is, the CSI-RS antenna ports with indexes sequentially 32, 33, ..., and 47 ) configured in advance in the CSI-RS 1.

After receiving the beamformed CSI-RS sent by the network side through the CSI-RS antenna ports, the terminal side selects 18 CSI-RS antenna ports from the above 48 CSI-RS antenna ports based on the received CSI-RS, and then sends port indication information of the selected 18 CSI-RS antenna ports to the network side.

Optionally, the terminal side may use a 48-bit bitmap to send the port indication information.

For example, referring to FIG. 6, in the 48-bit bitmap, the CSI-RS antenna port selected by the terminal side is represented as 1, and the CSI-RS antenna port not selected by the terminal side is represented as 0.

For another example, the terminal side may also send the port indication information by using a combinatorial number ( $\lceil \log_2 C_X^P \rceil = \lceil \log_2 C_{18}^{48} \rceil = 42 \text{bits}$ ).

If, it assumes that the terminal side selects all the CSI-RS antenna ports, the terminal side does not need to feed back the port indication information of the CSI-RS antenna ports selected by the terminal side to the network side.

In another aspect, after receiving the beamformed CSI-RS sent by the network side through the CSI-RS antenna ports, the terminal side may further estimate downlink equivalent channel information based on the received CSI-RS, and then obtains port combination coefficients corresponding to the CSI-RS antenna ports through calculation and feeds back the same to the network side.

It assumes that the terminal side selects 18 CSI-RS antenna ports from the above 48 CSI-RS antenna ports, and the terminal side will perform quantization processing on the port combination coefficients corresponding to the above 18 CSI-RS antenna ports, and sends the quantized port combination coefficients to the network side.

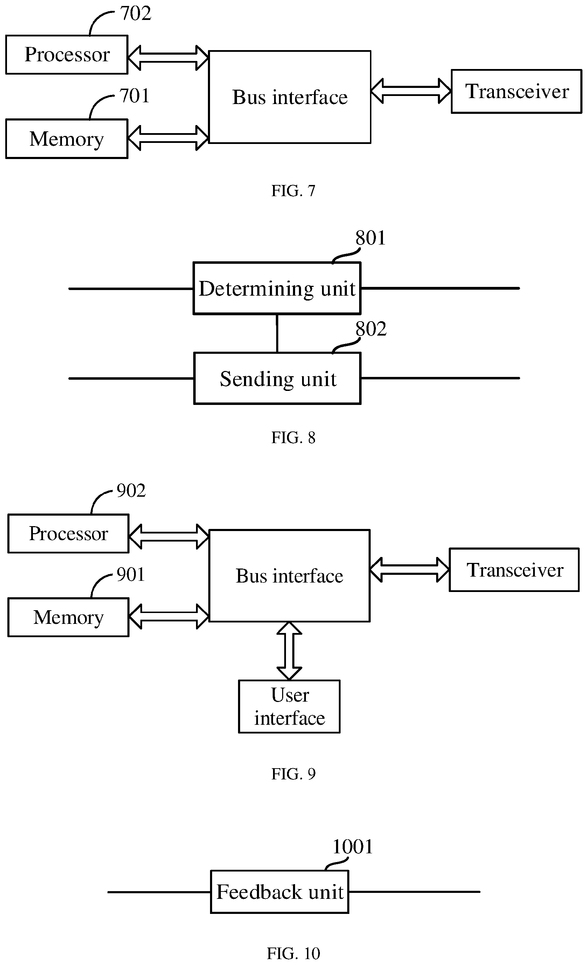

Based on the same inventive concept, referring to FIG. 7, a network device (such as a base station) according to an embodiment of the disclosure, at least includes:

a memory 701, configured to store executable instructions; and
a processor 702, configured to read and execute the executable instructions stored in the memory 701 so as to execute the following:

determining K CSI-RS resources configured for a terminal side, where, $K \geq 1$, K is an integer, a $k^{th}$ CSI-RS resource includes $P_k$ CSI-RS antenna ports, and $k \in [1, K]$; and
sending a beamformed CSI-RS to the terminal side by using P different beams on P CSI-RS antenna ports respectively, where, $P = \sum_{k=1}^{K} P_k$, and P is the number of beams to be sent.

Optionally, before sending the beamformed CSI-RS to the terminal side by using the P different beams on the P CSI-RS antenna ports respectively, the processor 702 is further configured to perform:
determining indexes of P CSI-RS antenna ports according to a following mode:

ordering identities (IDs) of the K CSI-RS resources from small to large;
configuring, based on the number of the beams to be sent, the number of the corresponding CSI-RS antenna ports for the K CSI-RS resources respectively, where, the $k^{th}$ CSI-RS resource is configured to include $P_k$ CSI-RS antenna ports, $k \in [1, K]$, $P = \sum_{k=1}^{K} P_k$, and P is the number of the beams to be sent; and
setting, based on the IDs of the K CSI-RS resources and the number of the CSI-RS antenna ports respectively included in each of the K CSI-RS resources, indexes of the CSI-RS antenna ports included in each of the K CSI-RS resources respectively.

Optionally, before determining the K CSI-RS resources configured for the terminal side, the processor 702 is further configured to perform:

configuring the K CSI-RS resources on the same orthogonal frequency division multiplexing (OFDM) symbols; or
configuring the K CSI-RS resources on different OFDM symbols.

Optionally, before sending the beamformed CSI-RS to the terminal side by using the P different beams on the P CSI-RS antenna ports respectively, the processor 702 is further configured to perform:
estimate uplink channel information based on an uplink pilot signal, and determine P beams used for sending the CSI-RS to the terminal side according to the uplink channel information, where any one of the P beams is associated with any one or combination of the following information: a spatial domain basis vector representing angle information, and a frequency domain basis vector representing delay information.

Optionally, in sending the beamformed CSI-RS to the terminal side by using the P different beams on the P CSI-RS antenna ports respectively, the processor 702 is configured to perform the following operation respectively for the P CSI-RS antenna ports:

determining an $i^{th}$ CSI-RS antenna port, where, $i \in [n, n+P-1]$, and n is an initial value of an index of the CSI-RS antenna port; and
on the $i^{th}$ antenna port, performing beamforming on the CSI-RS using a corresponding $i^{th}$ beam, and sending the $i^{th}$ beam to the terminal side.

Optionally, after sending the beamformed CSI-RS to the terminal side by using the P different beams on the P CSI-RS antenna ports respectively, the processor 702 is further configured to perform:

determining a downlink precoder used for sending downlink data to the terminal side based on feedback information of the terminal side, where the feedback information includes any one or combination of the followings:

port indication information of one or L data transmission layers selected by the terminal side, where, L> 1, and L is an integer;

port combination coefficients of one or L data transmission layers obtained by the terminal side through calculation based on the received beamformed CSI-RS; and

nonzero coefficient indication information of the one or L data transmission layers selected by the terminal side.

As shown in FIG. 7, a bus architecture may include any number of interconnected buses and bridges, all of which are specifically linked together by various circuits of one or more processors represented by the processor 702 and memories represented by the memory 701. The bus architecture may further link other various circuits such as peripheral devices, voltage stabilizers and power management circuits together, which is publicly known to the art, and thus, further description is omitted herein. A bus interface provides an interface. A transceiver may be a plurality of elements, namely, including a transmitter and a receiver, and units for being in communication with other various apparatuses on a transmission medium are provided. The processor 702 is responsible for managing the bus architecture and general processing, and the memory 701 may store data used by the processor 702 when executing operation.

Based on the same inventive concept, referring to FIG. 8, an embodiment of the disclosure provides a network device (such as a base station), at least including a determining unit 801 and a sending unit 802.

The determining unit 801 is used for determining K CSI-RS resources configured for a terminal side, where, $K \geq 1$, K is an integer, a $k^{th}$ CSI-RS resource includes $P_k$ CSI-RS antenna ports, and $k \in [1, K]$.

The sending unit 802 is used for sending a beamformed CSI-RS to the terminal side by using P different beams on P CSI-RS antenna ports respectively, where, $P = \sum_{k=1}^{K} P_k$, and P is the number of beams to be sent.

In embodiments of the disclosure, the above determining unit 801 is mutually matched with the sending unit 802 to implement any method executed by the network device in the above embodiments.

Based on the same inventive concept, referring to FIG. 9, an embodiment of the disclosure provides a computer terminal (such as UE at a terminal side), at least including:

a memory 901, configured to store executable instructions; and

a processor 902, configured to read programs in the memory 901 to execute the following:

sending feedback information to a network side, after receiving CSI-RS sent in any method executed by the above network device adopted by the network side.

Optionally, after sending the feedback information to the network side, the processor 902 is configured to perform:

selecting Q CSI-RS antenna ports from P CSI-RS antenna ports; and

performing quantization processing on port combination coefficients of one or L data transmission layers corresponding to the Q CSI-RS antenna ports, and send the quantized port combination coefficients to the network side.

Optionally, after sending the feedback information to the network side, the processor 902 is configured to perform:
sending port indication information of one or L data transmission layers corresponding to the CSI-RS antenna ports in a first polarization direction to the network side, where, L>1, and L is an integer.

Optionally, the processor 902 is further configured to perform:

sending the port indication information of the one or L data transmission layers using a bitmap; or

sending the port indication information of the one or L data transmission layers using a combinatorial number, where, L> 1, and L is an integer; and

sending nonzero coefficient indication information of the one or L data transmission layers using a bitmap; or

sending the nonzero coefficient indication information of the one or L data transmission layers using a combinatorial number.

As shown in FIG. 9, a bus architecture may include any number of interconnected buses and bridges, all of which are specifically linked together by various circuits of one or more processors represented by the processor 902 and memories represented by the memory 901. The bus architecture may further link other various circuits such as peripheral devices, voltage stabilizers and power management circuits together, which is publicly known to the art, and thus, further description is omitted herein. A bus interface provides an interface. A transceiver may be a plurality of elements, namely, including a transmitter and a transceiver, and units for being in communication with other various apparatuses on a transmission medium are provided. For different kinds of use equipment, a user interface may further be an interface capable of being externally and internally connected with required devices, and the connected devices include but are not limited to a keypad, a display, a loudspeaker, a microphone, an operating lever and the like.

The processor 902 is responsible for managing the bus architecture and general processing, and the memory 901 may store data used by the processor 902 when executing operation.

Based on the same inventive concept, referring to FIG. 10, an embodiment of the disclosure provides a computer terminal (such as UE at a terminal side), at least including a feedback unit 1001.

The feedback unit 1001 is used for receiving CSI-RS sent by the network side by using any method executed by the above network device, and sending feedback information to the network side.

In embodiments of the disclosure, the above feedback unit 1001 implements any method executed by the computer terminal in the above embodiments.

Based on the same inventive concept, an embodiment of the disclosure provides a computer readable storage medium, and when instructions in the computer readable storage medium are executed by a processor, the processor can execute any method executed by a network side in the above embodiments.

Based on the same inventive concept, an embodiment of the disclosure provides a computer readable storage medium, and when instructions in the computer readable storage medium are executed by a processor, the processor can execute any method executed by a terminal side in the above embodiments.

In conclusion, in embodiments of the disclosure, the network side determines the K CSI-RS resources configured for the terminal side, where, the $k^{th}$ CSI-RS resource includes the $P_k$ CSI-RS antenna ports; then the beamformed CSI-RS is sent to the terminal side by using P different beams on the P CSI-RS antenna ports respectively, where, $P = \sum_{k=1}^{K} P_k$ , and P is the number of the beams to be sent. In this way, the network side may reasonably configure the CSI-RS resources and the number of the CSI-RS antenna ports included in the CSI-RS resources in advance based on the number of the beams to be sent, on each CSI-RS antenna port, the beamformed CSI-RS is sent to the terminal side respectively by using one beam, so that all the beams to be sent of the CSI-RS can be sent to the CSI-RS antenna ports in time, and the situation that some beamformed CSI-RS cannot be sent in time due to the limitation of the total number of the CSI-RS antenna ports in the NR system is effectively avoided.

Those skilled in the art should understand that embodiments of the disclosure may be provided as a method, a system, or a computer program product. Therefore, the disclosure may adopt a mode of a complete hardware embodiment, a complete software embodiment, or an embodiment combining with software and hardware. In addition, the disclosure may adopt a mode of a computer program product implemented on one or more computer usable storage media (including but not limited to a disk storage, a CD-ROM, an optical storage and the like) containing computer usable program codes.

The disclosure makes description according to a flow diagram and/or a block diagram of the method, the device (system), and the computer program product of the embodiments of the disclosure. It should be understood that computer program instructions may implement each flow and/or block of the flow diagram and/or the block diagram, and a combination of the flow and/or block of the flow diagram and/or the block diagram. These computer program instructions may be provided for processors of a computer, a dedicated computer, an embedded processor or other programmable data processing devices to generate a machine, so that the instructions executed by the processors of the computer or other programmable data processing devices generate apparatuses for implementing assigned functions in one or more flows of the flow diagram and/or one or more blocks of the block diagram.

These computer program instructions may also be stored in a computer readable storage capable of guiding the computer or other programmable data processing devices to work in a specific mode, so that instructions stored in the computer readable storage generate manufactures including an instruction apparatus, and the instruction apparatus implements assigned functions in one or more flows of the flow diagram and/or one or more blocks of the block diagram.

These computer program instructions may also be loaded to the computer or other programmable data processing devices, so that a series of operation steps are executed on the computer or other programmable devices to generate processing implemented by the computer, and thus the instructions executed on the computer or other programmable devices provide steps for implementing assigned functions in one or more flows of the flow diagram and/or one or more blocks of the block diagram.

Although the preferred embodiments of the disclosure have been described, those skilled in the art can make additional variations and modifications to these embodiments once they know the basic creative concept. So the appended claims are intended to include the preferred embodiments and all variations and modifications that fall into the scope of the disclosure.

It will be apparent to those skilled in the art that various modifications and variations can be made to the disclosure without departing from the spirit or scope of the disclosure. Thus, if the modifications and variations of the embodiments of the disclosure fall within the scope of the appended claims of the disclosure and their equivalents, the disclosure is also intended to include such modifications and variations.

**Claims**

1. A channel state information-reference signal, CSI-RS, enhanced transmission method, comprising:

   determining K CSI-RS resources configured for a terminal side, wherein, $K \geq 1$, K is an integer, a $k^{th}$ CSI-RS resource comprises $P_k$ CSI-RS antenna ports, and $k \in [1, K]$; and
   sending a beamformed CSI-RS to the terminal side by using P different beams on P CSI-RS antenna ports respectively, wherein,
   $P = \sum_{k=1}^{K} P_k$, and P is a quantity of beams to be sent.

2. The method according to claim 1, wherein before sending the beamformed CSI-RS to the terminal side by using the P different beams on the P CSI-RS antenna ports respectively, the method further comprises:
   determining indexes of the P CSI-RS antenna ports as follows:

   ordering identities, IDs, of the K CSI-RS resources from small to large;
   configuring a quantity of CSI-RS antenna ports in each of the K CSI-RS resources respectively based on the quantity of the beams to be sent, wherein, the $k^{th}$ CSI-RS resource is configured to comprise $P_k$ CSI-RS antenna ports, $k \in [1, K]$,
   $P = \sum_{k=1}^{K} P_k$, and P is the quantity of the beams to be sent; and
   setting indexes of the CSI-RS antenna ports in each of the K CSI-RS resources respectively, based on the IDs of the K CSI-RS resources and the quantity of the CSI-RS antenna ports in each of the K CSI-RS resources.

3. The method according to claim 2, wherein before determining the K CSI-RS resources configured for the terminal side, the method further comprises:

   configuring the K CSI-RS resources on a same orthogonal frequency division multiplexing, OFDM, symbol; or
   configuring the K CSI-RS resources on different OFDM symbols.

4. The method according to claim 2, wherein before sending the beamformed CSI-RS to the terminal side by using the P different beams on the P CSI-RS antenna ports respectively, the method further comprises:

   estimating uplink channel information based on an uplink pilot signal; and
determining P beams used for sending the CSI-RS to the terminal side according to the uplink channel information;
wherein any one of the P beams is associated with any one or combination of the following information:
a spatial domain basis vector representing angle information, or a frequency domain basis vector representing delay information.

5. The method according to any one of claims 2-4, wherein the sending the beamformed CSI-RS to the terminal side by using the P different beams on the P CSI-RS antenna ports respectively, comprises: executing a following operation respectively for the P CSI-RS antenna ports:

   determining an $i^{th}$ CSI-RS antenna port, wherein, $i \in [n, n+P-1]$, and n is an initial value of an index of the CSI-RS antenna port; and
   sending an $i^{th}$ beam corresponding to the $i^{th}$ antenna port to the terminal side on the $i^{th}$ antenna port, after performing beamforming on the CSI-RS using the $i^{th}$ beam.

6. The method according to claim 5, wherein after sending the beamformed CSI-RS to the terminal side by using the P different beams on the P CSI-RS antenna ports respectively, the method further comprises:
   determining a downlink precoder for sending downlink data to the terminal side based on feedback information from the terminal side, wherein the feedback information comprises any one or combination of following:

   port indication information of one or L data transmission layers selected by the terminal side, wherein, $L > 1$, and L is an integer;
   port combination coefficients of the one or L data transmission layers obtained by the terminal side through calculation based on the received beamformed CSI-RS; or
   nonzero coefficient indication information of the one or L data transmission layers selected by the terminal side.

7. A method for sending feedback information, comprising:

   receiving CSI-RS sent by a network side by adopting the method according to any one of claims 1-6; and
   sending feedback information to the network side.

8. The method according to claim 7, wherein the sending the feedback information to the network side comprises:

selecting Q CSI-RS antenna ports from P CSI-RS antenna ports;

performing quantization processing on port combination coefficients of one or L data transmission layers corresponding to the Q CSI-RS antenna ports; and

sending the quantized port combination coefficients to the network side;

wherein, L>1, and L is an integer.

9. The method according to claim 7, wherein the sending the feedback information to the network side comprises:

sending port indication information of one or L data transmission layers corresponding to the CSI-RS antenna ports in a first polarization direction to the network side, wherein, L>1, and L is an integer.

10. The method according to any one of claims 7-9, further comprising:

sending port indication information of one or L data transmission layers using a bitmap; or

sending port indication information of one or L data transmission layers using a combinatorial number, wherein, L>1, and L is an integer; and

sending nonzero coefficient indication information of the one or L data transmission layers using a bitmap; or

sending nonzero coefficient indication information of the one or L data transmission layers using a combinatorial number.

11. A network device, comprising:

a memory, configured to store executable instructions; and

a processor, configured to read and execute the executable instructions stored in the memory so as to execute:

determining K CSI-RS resources configured for a terminal side, wherein, $K \geq 1$, K is an integer, a $k^{th}$ CSI-RS resource comprises $P_k$ CSI-RS antenna ports, and $k \in [1, K]$; and

sending a beamformed CSI-RS to the terminal side by using P different beams on P CSI-RS antenna ports respectively, wherein, $P = \sum_{k=1}^{K} P_k$, and P is a quantity of beams to be sent.

12. The network device according to claim 11, wherein before sending the beamformed CSI-RS to the terminal side by using the P different beams on the P CSI-RS antenna ports respectively, the processor is further configured to perform:

determining indexes of the P CSI-RS antenna ports as follows:

ordering identities of the K CSI-RS resources from small to large;

configuring a quantity of CSI-RS antenna ports in each of the K CSI-RS resources respectively based on the quantity of the beams to be sent, wherein, the $k^{th}$ CSI-RS resource is configured to comprise $P_k$ CSI-RS antenna ports, $k \in [1, K]$,

$P = \sum_{k=1}^{K} P_k$, and P is the quantity of the beams to be sent; and

setting indexes of the CSI-RS antenna ports in each of the K CSI-RS resources respectively, based on the IDs of the K CSI-RS resources and the quantity of the CSI-RS antenna ports in each of the K CSI-RS resources.

13. The network device according to claim 12, wherein before determining the K CSI-RS resources configured for the terminal side, the processor is further configured to perform:

configuring the K CSI-RS resources on a same orthogonal frequency division multiplexing, OFDM, symbol; or

configuring the K CSI-RS resources on different OFDM symbols.

14. The network device according to claim 12, wherein before sending the beamformed CSI-RS to the terminal side by using the P different beams on the P CSI-RS antenna ports respectively, the processor is further configured to perform:

estimating uplink channel information based on an uplink pilot signal; and

determining P beams used for sending the CSI-RS to the terminal side according to the uplink channel information;

wherein any one of the P beams is associated with any one or combination of the following information:

a spatial domain basis vector representing angle information, or a frequency domain basis vector representing delay information.

15. The network device according to any one of claims 12-14, wherein when sending the beamformed CSI-RS to the terminal side by using the P different beams on the P CSI-RS antenna ports respectively, the processor is configured to perform:

execute a following operation respectively for the P CSI-RS antenna ports:

determining an $i^{th}$ CSI-RS antenna port, wherein, $i \in [n, n+P-1]$, and n is an initial value of an index of the CSI-RS antenna port; and sending an $i^{th}$ beam corresponding to the $i^{th}$ antenna port to the terminal side on the $i^{th}$ antenna port, after performing beamforming on the CSI-RS using the $i^{th}$ beam.

16. The network device according to claim 15, wherein after sending the beamformed CSI-RS to the terminal side by using the P CSI-RS antenna ports respectively, the processor is further configured to perform: determining a downlink precoder for sending downlink data to the terminal side based on feedback information from the terminal side, wherein the feedback information comprises any one or combination of following:

port indication information of one or L data transmission layers selected by the terminal side, wherein, L>1, and L is an integer; port combination coefficients of one or L data transmission layers obtained by the terminal side through calculation based on the received beamformed CSI-RS; or nonzero coefficient indication information of the one or L data transmission layers selected by the terminal side.

17. A computer terminal, comprising:

a memory, configured to store executable instructions; and a processor, configured to read and execute the executable instructions stored in the memory so as to execute:

receiving a CSI-RS sent by a network side by using the method according to any one of claims 1-6; and sending feedback information to the network side.

18. The computer terminal according to claim 17, wherein when sending the feedback information to the network side, the processor is configured to perform:

selecting Q CSI-RS antenna ports from P CSI-RS antenna ports; and performing quantization processing on port combination coefficients of one or L data transmission layers corresponding to the Q CSI-RS antenna ports; and sending the quantized port combination coefficients to the network side, wherein, L>1, and L is an integer.

19. The computer terminal according to claim 17, wherein when sending the feedback information to the network side, the processor is configured to perform: sending port indication information of one or L data transmission layers corresponding to the CSI-RS antenna ports in a first polarization direction to the network side, wherein, L>1, and L is an integer.

20. The computer terminal according to any one of claims 17-19, wherein the processor is further configured to:

sending port indication information of one or L data transmission layers using a bitmap; or sending port indication information of one or L data transmission layers using a combinatorial number, wherein, L> 1, and L is an integer; and sending nonzero coefficient indication information of the one or L data transmission layers using a bitmap; or sending nonzero coefficient indication information of the one or L data transmission layers using a combinatorial number.

21. A channel state information-reference signal, CSI-RS, enhanced transmission apparatus, comprising:

a determining unit, used for determining K CSI-RS resources configured for a terminal side, wherein, $K \geq 1$, K is an integer, a $k^{th}$ CSI-RS resource comprises $P_k$ CSI-RS antenna ports, and $k \in [1, K]$; and a sending unit, used for sending a beamformed CSI-RS to the terminal side by using P different beams on P CSI-RS antenna ports respectively, wherein, $P = \sum_{k=1}^{K} P_k$, and P is a quantity of beams to be sent.

22. The apparatus according to claim 21, wherein before sending the beamformed CSI-RS to the terminal side by using the P different beams on the P CSI-RS antenna ports respectively, the determining unit is further used for: determining indexes of the P CSI-RS antenna ports as follows:

ordering identities, IDs, of the K CSI-RS resources from small to large; configuring a quantity of CSI-RS antenna ports in each of the K CSI-RS resources respectively based on the quantity of the beams to be sent, wherein, the $k^{th}$ CSI-RS resource is configured

to comprise $P_k$ CSI-RS antenna ports, $k \in [1, K]$,

$$P = \sum_{k=1}^{K} P_k$$

, and P is the quantity of the beams to be sent; and
setting indexes of the CSI-RS antenna ports in each of the K CSI-RS resources respectively, based on the IDs of the K CSI-RS resources and the quantity of the CSI-RS antenna ports in each of the K CSI-RS resources.

23. The apparatus according to claim 22, wherein before determining the K CSI-RS resources configured for the terminal side, the determining unit is further used for:

configuring the K CSI-RS resources on a same orthogonal frequency division multiplexing, OFDM, symbol; or
configuring the K CSI-RS resources on different OFDM symbols.

24. The apparatus according to claim 22, wherein before sending the beamformed CSI-RS to the terminal side by using the P different beams on the P CSI-RS antenna ports respectively, the determining unit is further used for:

estimating uplink channel information based on an uplink pilot signal; and
determining P beams used for sending the CSI-RS to the terminal side according to the uplink channel information;
wherein any one of the P beams is associated with any one or combination of the following information:
a spatial domain basis vector representing angle information, or a frequency domain basis vector representing delay information.

25. The apparatus according to any one of claims 22-24, wherein when sending the beamformed CSI-RS to the terminal side by using the P different beams through the P CSI-RS antenna ports respectively, the sending unit is used for:
execute a following operation respectively for the P CSI-RS antenna ports:

determining an $i^{th}$ CSI-RS antenna port, wherein, $i \in [n, n+P-1]$, and n is an initial value of an index of the CSI-RS antenna port; and
sending an $i^{th}$ beam corresponding to the $i^{th}$ antenna port to the terminal side on the $i^{th}$ antenna port, after performing beamforming on the CSI-RS using the $i^{th}$ beam.

26. The apparatus according to claim 25, wherein after sending the beamformed CSI-RS to the terminal side by using the P different beams on the P CSI-RS antenna ports respectively, the sending unit is further used for:
determining a downlink precoder for sending downlink data to the terminal side based on feedback information from the terminal side, wherein the feedback information comprises any one or combination of following:

port indication information of one or L data transmission layers selected by the terminal side, wherein, L>1, and L is an integer;
port combination coefficients of the one or L data transmission layers obtained by the terminal side through calculation based on the received beamformed CSI-RS; or
nonzero coefficient indication information of the one or L data transmission layers selected by the terminal side.

27. An apparatus for sending feedback information, comprising:

a feedback unit, used for
receiving CSI-RS sent by a network side by adopting the method according to any one of claims 1-6; and
sending feedback information to the network side.

28. The apparatus according to claim 27, wherein when sending the feedback information to the network side, the feedback unit is used for:

selecting Q CSI-RS antenna ports from P CSI-RS antenna ports;
performing quantization processing on port combination coefficients of one or L data transmission layers corresponding to the Q CSI-RS antenna ports; and
sending the quantized port combination coefficients to the network side, wherein, L>1, and L is an integer.

29. The apparatus according to claim 27, wherein when sending the feedback information to the network side, the feedback unit is used for:
sending port indication information of one or L data transmission layers corresponding to the CSI-RS antenna ports in a first polarization direction to the network side, wherein, L>1, and L is an integer.

30. The apparatus according to any one of claims 27-29, wherein the feedback unit is further used for:

sending port indication information of one or L data transmission layers using a bitmap; or
sending port indication information of one or L data transmission layers using a combinatorial number, wherein, L>1, and L is an integer; and

sending nonzero coefficient indication information of the one or L data transmission layers using a bitmap; or

sending nonzero coefficient indication information of the one or L data transmission layers using a combinatorial number.

**31.** A computer readable storage medium, wherein instructions in the computer readable storage medium, when executed by a processor, enable the processor to execute the method according to any one of claims 1-6.

**32.** A computer readable storage medium, wherein instructions in the computer readable storage medium, when executed by a processor, enable the processor to execute the method according to any one of claims 7-10.

The network side determines K CSI-RS resources configured for the terminal side, where, K≥1, K is an integer, the $k^{th}$ CSI-RS resource includes $P_k$ CSI-RS antenna ports, and k ∈ [1, K]

100

The network side sends beamformed CSI-RS to the terminal side by using P different beams on P CSI-RS antenna ports respectively, where, $P = \sum_{k=1}^{K} P_k$, and P is the number of beams to be sent

110

FIG. 1

The terminal side receives the CSI-RS sent by the network side

200

The terminal side sends feedback information to the network side

210

FIG. 2

FIG. 3

FIG. 4

FIG. 5

FIG. 6

702

Processor

701

Memory

Bus interface

Transceiver

FIG. 7

801

Determining unit

802

Sending unit

FIG. 8

902

Processor

901

Memory

Bus interface

Transceiver

User interface

FIG. 9

1001

Feedback unit

FIG. 10

## INTERNATIONAL SEARCH REPORT

| | International application No. |
|---|---|
| | **PCT/CN2021/120780** |

**A. CLASSIFICATION OF SUBJECT MATTER**

H04L 5/00(2006.01)i;  H04B 7/06(2006.01)i

According to International Patent Classification (IPC) or to both national classification and IPC

**B. FIELDS SEARCHED**

Minimum documentation searched (classification system followed by classification symbols)

H04L; H04W; H04B

Documentation searched other than minimum documentation to the extent that such documents are included in the fields searched

Electronic data base consulted during the international search (name of data base and, where practicable, search terms used)

CNPAT, CNKI, WPI, EPODOC, 3GPP: 信道状态信息参考信号, CSI-RS, 资源, 个数, 数量, 数目, 天线, 端口, 波束, 索引, resource, number, amount, antenna, port, beam, index

**C. DOCUMENTS CONSIDERED TO BE RELEVANT**

| Category* | Citation of document, with indication, where appropriate, of the relevant passages | Relevant to claim No. |
|---|---|---|
| Y | CN 109890078 A (HUAWEI TECHNOLOGIES CO., LTD.) 14 June 2019 (2019-06-14) description paragraphs 0081-0121 | 1-32 |
| Y | CN 107204794 A (CHINA ACADEMY OF TELECOMMUNICATIONS TECHNOLOGY) 26 September 2017 (2017-09-26) description paragraphs 0129-0140 | 1-32 |
| A | CN 107431522 A (LG ELECTRONICS INC.) 01 December 2017 (2017-12-01) entire document | 1-32 |
| A | CN 108781450 A (QUALCOMM INC.) 09 November 2018 (2018-11-09) entire document | 1-32 |
| A | LG ELECTRONICS. "On CSI-RS design for beam management" *3GPP TSG RAN WG1 Meeting #89, R1-1707612,* 19 May 2017 (2017-05-19), entire document | 1-32 |
| A | LG ELECTRONICS. "Discussion on DL Beam Management" *3GPP TSG RAN WG1 Meeting #89, R1- 1707604,* 19 May 2017 (2017-05-19), entire document | 1-32 |

☑ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **16 December 2021** | **30 December 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2021/120780**

### C. DOCUMENTS CONSIDERED TO BE RELEVANT

| Category* | Citation of document, with indication, where appropriate, of the relevant passages | Relevant to claim No. |
|---|---|---|
| A | US 2016142189 A1 (ELECTRONICS AND TELECOMMUNICATIONS RESEARCH INSTITUTE) 19 May 2016 (2016-05-19) entire document | 1-32 |

**INTERNATIONAL SEARCH REPORT**
Information on patent family members

International application No.

**PCT/CN2021/120780**

| Patent document cited in search report | | | Publication date (day/month/year) | Patent family member(s) | | | Publication date (day/month/year) |
|---|---|---|---|---|---|---|---|
| CN | 109890078 | A | 14 June 2019 | CN | 110809900 | A | 18 February 2020 |
| | | | | JP | 2020507236 | A | 05 March 2020 |
| | | | | CN | 109890079 | A | 14 June 2019 |
| | | | | EP | 3537809 | A1 | 11 September 2019 |
| | | | | CN | 108633068 | A | 09 October 2018 |
| | | | | CA | 3044493 | A1 | 27 September 2018 |
| | | | | US | 2019261345 | A1 | 22 August 2019 |
| | | | | BR | 112019011295 | A2 | 08 October 2019 |
| | | | | IN | 201937020795 | A | 27 September 2019 |
| | | | | WO | 2018171647 | A1 | 27 September 2018 |
| CN | 107204794 | A | 26 September 2017 | EP | 3432482 | A1 | 23 January 2019 |
| | | | | KR | 20180124105 | A | 20 November 2018 |
| | | | | US | 2019089437 | A1 | 21 March 2019 |
| | | | | JP | 2019510419 | A | 11 April 2019 |
| | | | | WO | 2017157082 | A1 | 21 September 2017 |
| | | | | IN | 201827039419 | A | 12 July 2019 |
| CN | 107431522 | A | 01 December 2017 | US | 2020169303 | A1 | 28 May 2020 |
| | | | | CN | 112865847 | A | 28 May 2021 |
| | | | | WO | 2016163841 | A1 | 13 October 2016 |
| | | | | CN | 107466446 | A | 12 December 2017 |
| | | | | US | 2018115357 | A1 | 26 April 2018 |
| | | | | WO | 2016163842 | A1 | 13 October 2016 |
| | | | | US | 2018123654 | A1 | 03 May 2018 |
| CN | 108781450 | A | 09 November 2018 | US | 2019036579 | A1 | 31 January 2019 |
| | | | | BR | 112018069423 | A2 | 22 January 2019 |
| | | | | AU | 2017239113 | A1 | 30 August 2018 |
| | | | | WO | 2017162050 | A1 | 28 September 2017 |
| | | | | EP | 3434051 | A1 | 30 January 2019 |
| | | | | CA | 3015251 | A1 | 28 September 2017 |
| | | | | IN | 201847030505 | A | 24 August 2018 |
| US | 2016142189 | A1 | 19 May 2016 | KR | 20160055086 | A | 17 May 2016 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011147246